Europäisches Patentamt

European Patent Office

Office européen des brevets

(11) Veröffentlichungsnummer: **0 151 734**
A2

# EUROPÄISCHE PATENTANMELDUNG

(21) Anmeldenummer: **84114998.2**

(22) Anmeldetag: **08.12.84**

(51) Int. Cl.⁴: **B 60 J 7/10**
**B 60 J 7/04**

(30) Priorität: **15.12.83 DE 3345328**

(43) Veröffentlichungstag der Anmeldung:
**21.08.85 Patentblatt 85/34**

(84) Benannte Vertragsstaaten:
**BE FR IT NL**

(71) Anmelder: **PLAVA Kunststoffe GmbH**
**Hauptstrasse 99**
**D-6367 Karben 3(DE)**

(72) Erfinder: **Scholl, Jürgen**
**Freiherr-vom-Stein-Strasse 20**
**D-6367 Karben 1(DE)**

(72) Erfinder: **Hommel, Guido**
**Hessenring 3**
**D-6457 Maintal 4(DE)**

(74) Vertreter: **Meier, Robert, Dipl.-Ing.**
**Patentanwalt Dipl.-Ing. Robert Meier Auf dem Mühlberg**
**16**
**D-6000 Frankfurt/Main(DE)**

(54) **Transparenter Aufsatz für eine Schiebedachöffnung in einem Kraftfahrzeugdach.**

(57) Ein mittels einer lösbaren Halterung fest auf einem Kraftfahrzeugdach anbringbarer, aus transparentem Kunststoff bestehender Regen- und Windabweiser für eine Schiebedachöffnung weist eine Luftleitfläche auf, die in Längs- und Querrichtung des Kraftfahrzeugdaches über die gesamte Länge und Breite der Schiebedachöffnung hinwegragt. Die Luftleitfläche weist außer abwärts gerichteten Vorder- und Seitenrändern auch einen nach abwärts gerichteten rückwärtigen Rand auf. Alle abwärts gerichteten Ränder häben mit Dichtungsprofilen versehene Randkanten, die am Kraftfahrzeugdach anliegen.

FIG.1

0151734

- 1 -

<u>Transparenter Aufsatz für eine Schiebedachöffnung in einem Kraft-</u>
<u>fahrzeugdach</u>

Die Erfindung bezieht sich auf einen über einer Kraftfahrzeug-Schiebedachöffnung festlegbaren Aufsatz aus transparentem Kunststoff mit einer Luftleitfläche sowie Vorder-. Seiten- und Rückrändern, deren Randkanten - unter Zwischenfügung des Dichtprofils - im Abstand von dem Rand der Schiebedachöffnung auf dem Kraftfahrzeugdach aufstehen.

Bekannt geworden ist ein derartiger transparenter Aufsatz, dessen vordere und rückwärtige Ränder an den seitlichen Regenrinnen am Kraftfahrzeugdach befestigt werden. Im einzelnen ist an beiden Enden jedes Randes ein Gurtband mit Haken befestigt, der unter die entsprechende Regenrinne gehakt wird. Zusätzlich sind zwischen jedem Haken und der zugehörigen Ecke des Aufsatzes Regulierschieber für die Haltespannung vorgesehen. Dieser Aufsatz sitzt daher elastisch auf dem Kraftfahrzeugdach und kann in Längsrichtung des Kraftfahrzeuges hin- und hergeschoben werden (Fr.PS 11 16 507).

Eine solche, oberhalb des Kraftfahrzeugdaches installierte Halterung für einen transparenten Aufsatz wird in keiner Weise den Sicherheitsanforderungen gerecht. Die Halterung wird schon infolge Sonneneinstrahlung rasch ihre Spannkraft verlieren mit der Folge, daß der recht großflächige, wie ein Flugzeugflügel gewölbte Aufsatz durch den Fahrtwind schon bei niedrigen Geschwindigkeiten vibriert oder sogar so weit vom Kraftfahrzeugdach abgehoben wird, daß die Luft in den dadurch entstehenden Spalt zwischen dem Kraftfahrzeugdach und dem vorderen Rand des Aufsatzes eintreten und den Aufsatz abheben kann. Auf keinen Fall ist die bekannte Halterung waschstraßenfest. Hinzu kommt, daß schon nach kurzer Zeit, vor allem entlang des vorderen Aufsatzrandes, die Wasserdichtigkeit nicht mehr garantiert werden kann. Entscheidend schließlich ist weiterhin, daß moderne Kraftfahrzeuge ohne seitliche Regenrinnen gebaut werden. Dieser Umstand nimmt dem bekannten Aufsatz sowie seiner Befestigungsart jede Grundlage.

Dem gegenüber liegt der vorliegenden Erfindung die Aufgabe zugrunde, einen transparenten Aufsatz und seine Befestigung auf dem Kraftfahrzeugdach so auszubilden, daß der Aufsatz bei jeder Geschwindigkeit sicher und wind- bzw. regendicht auf dem Kraftfahrzeugdach festsitzt, ohne daß dadurch der Schiebeweg des Schiebedaches gestört wird.

Es wurde gefunden, daß sich diese Aufgabe in einfacher Weise dadurch lösen läßt, daß der Aufsatz durch lösbare, in die Schiebedachöffnung hineinragende Stützelemente außerhalb des Schiebeweges des Schiebedaches an den Innenlängsrändern der Schiebedachöffnung festspannbar ist.

Hierdurch wird praktisch die Schiebedachöffnung wie von einem Panorama-Aufsatz verschlossen, wobei sich das Schiebedach ohne Störung verschließen und öffnen läßt. Infolge dessen kann bei jeder Witterung mit geöffnetem, insbesondere voll geöffnetem Schiebedach gefahren werden, wodurch eine wesentliche Verbesserung der Innenbeleuchtung des Kraftfahrzeuginnenraumes erfolgt. Die Entlüftung des Kraftfahrzeuginneren bzw. die Luftzirkulation wird durch die Wasserabläufe des Schiebedaches sichergestellt.

Der neuartige Panorama-Aufsatz läßt sich ohne Schwierigkeiten für alle gängigen Kraftfahrzeugtypen herstellen. Von besonderem Vorteil ist, daß er gegen einen bisherigen, nur den vorderen Bereich der Schiebedachöffnung überdeckenden Regen- und Windab-

weiser ausgetauscht werden kann, da die lösbare Halterung des bisherigen Windabweisers auch zur Befestigung des neuen Panorama-Aufsatzes verwendet werden kann.

Der neue Aufsatz zeichnet sich dadurch aus, daß die Luftleitfläche sowohl in Längsrichtung als auch in Querrichtung des Kraftfahrzeugdaches nahezu gleichlaufend zum geschlossenen Schiebedach verläuft. Mit anderen Worten: Die Luftleitfläche ist gleichlaufend zum darunterliegenden geschlossenen Schiebedach ausgebildet.

In materialsparender Weise beträgt der Abstand der Luftleitfläche vom geschlossenen Schiebedach nur wenige, vorzugsweise nur 2 bis 3 cm.

Die lösbaren Stützelemente sowie ihre Anordnung sind im einzelnen in den Ansprüchen 2 und 3 gekennzeichnet. Von Vorteil ist, daß ein- und derselbe Aufsatz - allein durch Veränderung der Anordnung der Durchstecklöcher für die Schraubbolzen der Stützelemente in der Windleitfläche - kostensparend an unterschiedlich bemessene Schiebedachöffnungen angepasst werden kann. Dieses setzt die Formkosten für die Aufsätze, die Lagerhalterung sowie die Notwendigkeit der Benutzung zahlreicher Bestellnummern auf ein erträgliches Minimum herab.

Nachfolgend wird ein Ausführungsbeispiel anhand der Figuren erläutert.

Es zeigt:

Fig. 1     eine Draufsicht auf ein Kraftfahrzeugdach,
Fig. 2     eine Schnittansicht entlang der Linie II, II in Fig. 1 und
Fig. 3     eine Schnittansicht entlang der Linie III, III in Fig. 1

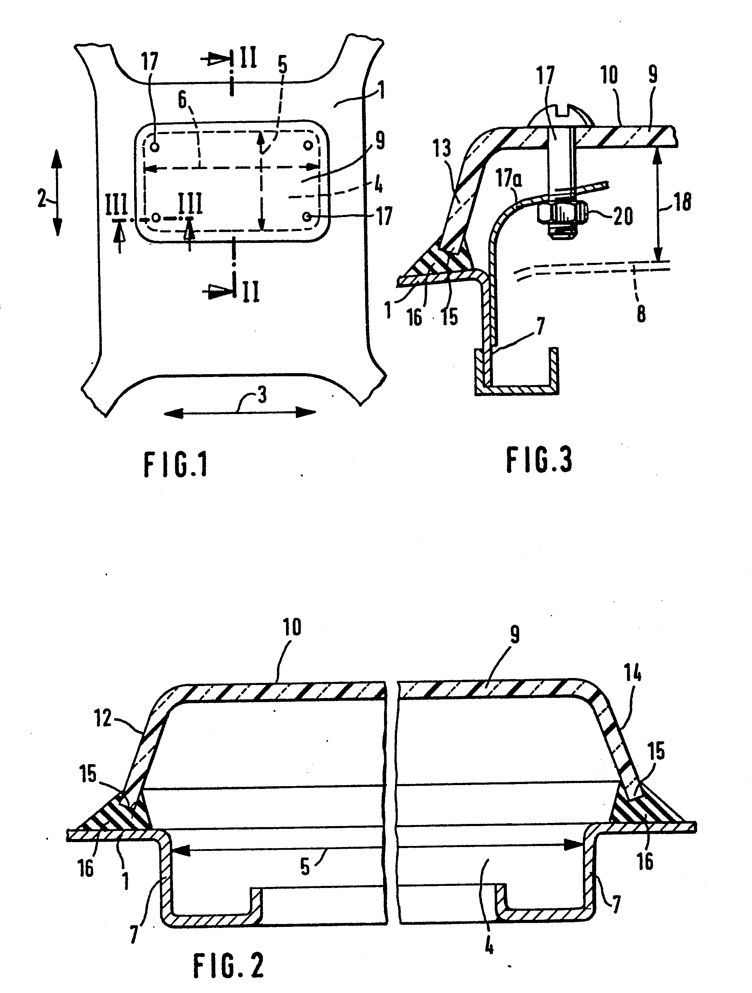

Fig. 1 zeigt eine Draufsicht auf ein Kraftfahrzeugdach 1 eines beliebigen Kraftfahrzeuges. Im vorderen Bereich, d.h. etwa über dem Fahrer- und dem Beifahrersitz ist mit gestrichelten Linien eine Schiebedachöffnung 4 angedeutet, welche in Längsrichtung 2 des Kraftfahrzeugdaches 1 eine Länge 5 und in Querrichtung 3 zum Kraftfahrzeugdach 1 eine Breite 6 aufweist. Der Außenrand der Schiebedachöffnung 4 ist durch die gestrichelte Linie angedeutet.

Auf der Öffnung ist ein Aufsatz 9 aus transparentem Kunststoff erkennbar, dessen in den Fig. 2 und 3 dargestellte Luftleitfläche 10 in Längs- und Querrichtung 2, 3 des Kraftfahrzeugdaches 1 über die gesamte Länge 5 und Breite 6 der Schiebedachöffnung 4 hinwegragt.

Fig. 1 läßt erkennen, daß der Aufsatz 9 durch eine lösbare Halterung fest auf dem Kraftfahrzeugdach anbringbar ist, die vier Stützelemente 17 einschließt, von denen eines in Fig. 3 dargegestellt ist. Gemäß Fig. 1 sind die Stützelemente 17 nahe den vier Ecken der Schiebedachöffnung 4 vorgesehen.

Fig. 2 zeigt einen Schnitt entlang der Linie II, II in Fig. 1. Die Schiebedachöffnung 4 ist in üblicher Weise in das Kraftfahrzeugdach 1 eingeformt. Sie wird durch Innenränder 7 begrenzt, die in nach innenragende Rinnen übergehen.

In Fig. 3 ist das Schiebedach 8 durch eine gestrichelte Linie angedeutet. Es steht in üblicher, hier nicht interessierender Weise mit dem Kraftfahrzeugdach in Wirkverbindung.

Fig. 2 zeigt deutlich, daß der Aufsatz 9 bzw. seine Luftleitfläche 10 in Längsrichtung 2 des Kraftfahrzeugdaches länger sind als die Länge 5 der Schiebedachöffnung 4. Die Luftleitfläche 10 geht in einen abwärtsragenden Vorderrand 12 und in einen ebenfalls abwärtsragenden rückwärtigen Rand 14 über. Beide Ränder enden in einer Randkante 15, um welche ein Dichtungsprofil 16 angeordnet ist. Das Dichtungsprofil 16 ist in der Regel eine endlosgeformte Dichtung, die über die gesamte Randkante 15 des Aufsatzes steckbar ist.

Fig. 3 zeigt entlang der Linie III, III einen Teilschnitt durch Fig. 1, durch den die Stützelemente 17 und 17a erkennbar sind. Als Stützelement 17 ist ein Schraubbolzen vorgesehen, der durch eine Öffnung in der Luftleitfläche 10 des Aufsatzes 9 hindurchgesteckt wird. Die Schraube 17 wirkt mit einem federnden Winkel 17a zusammen, der an dem Innenrand 7 der Schiebedachöffnung 4 festgelegt ist. In Verbindung mit einer Mutter 20 kann der Aufsatz 9 durch Zusammenwirken der Stützelemente 17 und 17a federnd auf dem Kraftfahrzeugdach befestigt werden. Durch gleichmäßiges Anziehen aller Stützelemente 17 gemäß Fig. 1 wird in Verbindung mit dem Dichtungsprofil 16 ein sicherer und wind- bzw. regendichter Sitz des Aufsatzes 9 auf dem Kraftfahrzeugdach 1 gewährleistet.

Fig. 3 läßt erkennen, daß der nach innenragende Winkelteil des Stützelementes 17a soweit oberhalb des Schiebedaches 8 angeordnet ist, daß das Ende des Stützelementes 17 und die Mutter 20 die Bewegung des Schiebedaches 8 nicht stören.

Fig. 3 zeigt, daß der Aufsatz 9 auch Seitenränder 13 aufweist, die entsprechend den Rädnern 12 und 14 geformt sind. Die Randkante 15 des Seitenrandes 13 sitzt ebenfalls im Dichtungsprofil 16.

Ohne am Kern der Erfindung etwas zu ändern, können als Stützelemente auch anders geformte Schrauben bzw. Haken verwendet werden.

Die Figuren lassen erkennen, daß die Luftleitfläche 10 sowohl in Längsrichtung 2 als auch in Querrichtung 3 des Kraftfahrzeugdaches 1 nahezu gleichlaufend zum geschlossenen Schiebedach 8 verläuft. Die Luftleitfläche 10 ist parallelflächig zum Schiebe-

**0151734**

dach 8 angeordnet. Hieraus ergibt sich, daß der erfindungsgemäße Aufsatz praktisch als Panorama-Aufsatz ausgebildet ist und nur geringen Luftwiderstand hat.

Der Abstand 18 zwischen der Luftleitfläche 10 und dem geschlossenen Schiebedach 8 ist gering. In bevorzugten Ausführungsbeispielen beträgt er 2 bis 3 cm.

Fig. 3 läßt erkennen, daß die Stützelemente 17 bzw. 17a auch geeignet sind, bisher bekannte Regen- bzw. Windabweiser für Schiebedachöffnungen auf Kraftfahrzeugdächern an diesen festzulegen, wenn diese nur den vorderen Bereich der Kraftfahrzeugdachöffnung überdecken. Hierdurch ergibt sich der Vorteil, daß beispielsweise im Winter der nur den vorderen Bereich der Schiebedachöffnung überdeckende Regen- und Windabweiser gegen den Panorama-Aufsatz nach der Erfindung ausgetauscht werden kann, ohne daß sich Befestigungsprobleme ergeben. Die Stützelemente 17, 17a zum Befestigen des hinteren Teiles des Aufsatzes 9 sind genauso ausgebildet wie die Stützelemente für die vordere Befestigung.

Transparenter Aufsatz für eine Schiebedachöffnung in einem Kraftfahrzeugdach

Liste der verwendeten Bezeichnungen

1 Kraftfahrzeugdach

2 Längsrichtung

3 Querrichtung

4 Schiebedachöffnung

5 Länge

6 Breite

7 Innenrand

8 Schiebedach

9 Aufsatz

10 Luftleitfläche

11

12 Vorderrand

13 Seitenrant

14 rückwärtiger Rand

15 Rückkante

16 Dichtungsprofil

17 Stützelement

17a Stützelement

18 Abstand

19

20 Mutter

- 8 -

<u>Patentansprüche</u>

1. Über einer Kraftfahrzeug-Schiebedachöffnung festlegbarer Aufsatz aus transparentem Kunststoff mit einer Luftleitfläche sowie Vorder-, Seiten- und Rückrändern, deren Randkanten - unter Zwischenfügung eines Dichtprofils - im Abstand vom Rand der Schiebedachöffnung auf dem Kraftfahrzeugdach aufstehen, dadurch gekennzeichnet, daß der Aufsatz (9) durch lösbare, in die Schiebedachöffnung (4) hineinragende Stützelemente (17, 17a) außerhalb des Schiebeweges des Schiebedaches (8) an den Innenlängsrändern (7) der Schiebedachöffnung (4) festspannbar ist.

2. Aufsatz nach Anspruch 1 dadurch gekennzeichnet, daß jedes lösbare Stützelement in an sich bekannter Weise aus einem durch eine Öffnung in der Luftleitfläche (10) steckbaren Schraubbolzen (17) und einen federnden Winkel (17a) besteht, der mittels einer Mutter (20) mit dem Schraubbolzen (17) in Wirkverbindung steht.

3. Aufsatz nach den Ansprüchen 1 und 2 dadurch gekennzeichnet, daß die federnden Winkel (17a) der Stützelemente (17, 17a) im Bereich der vorderen und hinteren Ecke der Schiebedachöffnung (4) an ihren Innenlängsrändern (7) befestigt sind.

4. Aufsatz nach den Ansprüchen 1 - 3 dadurch gekennzeichnet, daß der Abstand (18) der Luftleitfläche (10) vom geschlossenen Schiebedach (8) gering ist, vorzugsweise 2 - 3 cm beträgt.

0151734

FIG.1

FIG.3

FIG.2